# EUROPÄISCHE PATENTSCHRIFT

(11) **EP 1 716 463 B1**
(45) Veröffentlichungstag und Bekanntmachung des Hinweises auf die Patenterteilung: **30.04.2008**
(21) Anmeldenummer: 04740328.2
(22) Anmeldetag: 25.06.2004
(51) Int. Cl.: G05B 23/02, G05B 19/4065

(54) **VERFAHREN ZUR ERMITTLUNG EINES VERSCHLEISSES BEI MASCHINEN**
METHOD FOR DETERMINING WEAR AND TEAR IN MACHINES
PROCÉDÉ POUR DÉTERMINER UNE USURE SUR UNE MACHINE

(30) Priorität: 19.02.2004 EP 04003711
(43) Veröffentlichungstag der Anmeldung: 02.11.2006
(73) Patentinhaber: SIEMENS AKTIENGESELLSCHAFT, 80333 München (DE)
(72) Erfinder: DREIMANN, Markus, 80803 München (DE); FICK, Wolfgang, 81371 München (DE); GERK, Uwe, 96158 Frensdorf (DE)
(86) Internationale Anmeldenummer: PCT/EP2004/006920
(87) Internationale Veröffentlichungsnummer: WO 2005/091097

(56) Entgegenhaltungen:
- EP-A- 0 509 817
- DE-A- 3 828 594
- US-A- 4 464 866
- US-A- 5 523 701

## Beschreibung

Die Erfindung betrifft eine Kohlemahlmaschine, wie sie beispielsweise zur Kohleaufbereitung in einem Kraftwerk verwendet wird. Solche Maschinen bzw. Systeme sind insbesondere dadurch gekennzeichnet, dass sie aus miteinander gekoppelten Subsystemen aufgebaut sind, die ihrerseits aus verschiedenen Komponenten bestehen.

Bei solchen Systemen bzw. Anlagen im Industrie- und Kraftwerksbereich spielt die Diagnose, Verschließbestimmung und Fehlerfrüherkennung eine wichtige Rolle. Traditionell werden dazu dezidierte Messsysteme an den Subsystemen bzw. Komponenten verwendet, wie z.B. Temperaturmessungen, Thermographie, Schwingungsüberwachung und vielfältige weitere Verfahren zur Ermittlung des Verschleißes der zugehörigen Subsysteme und Komponenten. Die Meßsysteme bestehen in der Regel sowohl aus Messapparaturen als auch aus Auswerteeinheiten, die oftmals speziell konstruiert, angepasst und angebracht werden müssen. Beispielsweise müssen Subsysteme an Kohleaufbereitungsanlagen im Kraftwerksbereich mit Sensoren ausgestattet werden, wodurch zwar eine spezifische und relativ genaue Diagnose erreicht wird, zugleich aber diese Diagnose vergleichsweise aufwendig und teuer ist.

Aus der US Patentschrift US 5,523,701 ist bekannt, den Betrieb einer Maschine durch Untersuchung der Strom- und/oder Spannungsaufnahme des Maschinenantriebs zu überwachen. Dabei wird der aufgenommene Motorstrom entweder im Zeit- oder Frequenzbereich analysiert oder die spektralen Komponenten des Motorstroms werden ermittelt. Änderungen im elektrischen Hintergrundrauschen, welche durch mechanische Vibrationen innerhalb der Maschine induziert werden, können auf diese Weise mit Änderungen der Betriebsparameter der Maschine korreliert werden.

Der Erfindung liegt die Aufgabe zugrunde, eine Kohlemahlmaschine für Kraftwerke mit erweiterten Leistungsfähigkeiten insbesondere im Hinblick auf Diagnose bereitzustellen, welche vergleichsweise kostengünstig realisiert werden kann.

Diese Aufgabe ist erfindungsgemäß mit einer Kohlemahlmaschine mit Subsystemen gelöst, bei der ferner eine Einrichtung zum Ermitteln einer Strom- und/oder Spannungsaufnahme mindestens eines ersten Subsystems während des Betriebs und eine Einrichtung zum Rückschließen auf die Güte und/oder Art der mit einem zweiten Subsystem verarbeiteten Kohle auf der Grundlage der ermittelten Strom- und/oder Spannungsaufnahme vorgesehen ist.

Die erfindungsgemäße Lösung beruht auf einer Diagnose der Rückwirkung eines Subsystems auf ein anderes Subsystem mittels der Auswertung der Strom- und/oder Spannungsaufnahme des ersten Subsystems. Da bei bekannten Maschinen bzw. Systemen in der Regel die Strom- und/oder Spannungsaufnahme der einzelnen Subsysteme während des Betriebs bereits ermittelt wird, kann die erfindungsgemäße Diagnose in der Regel allein durch eine entsprechende Anpassung in einer Steuerung der Maschine und durch zugehörige Softwarelösungen erreicht werden. Die Kosten für die erfindungsgemäße Lösung sind daher vergleichsweise gering.

Bei einer vorteilhaften Ausgestaltung der erfindungsgemäßen Lösung handelt es sich bei dem ersten Subsystem beispielsweise um einen Elektromotor, und bei dem zweiten Subsystem um eine Kohlemühle. Aus der ermittelten Strom- und/oder Spannungsaufnahme des Motors werden erfindungsgemäß Aussagen zur Güte und/oder Art des mit der Maschine verarbeiteten Materials getroffen. So kann bei einer Kohlemahlmaschine insbesondere eine Aussage zur Güte und Art der verwendeten Kohle getroffen werden. Es kann z.B. ermittelt werden, wenn die Kohle einen hohen Inertanteil aufweist, und es kann auch auf die Herkunft der Kohle aus verschiedenen Weltregionen rückgeschlossen werden.

Damit die erfindungsgemäße Diagnose der Rückwirkungen zwischen den Subsystemen vergleichsweise präzise und dennoch besonders kostengünstig realisiert werden kann, ist es vorteilhaft, wenn der Antrieb der Maschine und das angetriebene Aggregat über eine Kraft- und/oder Drehmomentenübertragung starr bzw. steif, d.h. ohne wesentliche elastische Elemente innerhalb dieser Kraft- und/oder Drehmomentenübertragung, miteinander gekoppelt werden.

Die erfindungsgemäße Abtastung des Strom- und/oder Spannungssignals der Maschine erfolgt vorteilhaft regelmäßig, bevorzugt mit einer Frequenz zwischen 5 und 20 kHz.

Weiterhin ist die Einrichtung zum Rückschließen auf die Güte und/oder Art der verarbeiteten Kohle vorteilhaft derart ausgestaltet, dass Augenblickswerte (z.B. zu einem vorbestimmten Zeitpunkt), und/oder Mittelwerte (z.B. Route Mean Square (RMS) aus Zeit- und Hochfrequenzsignalen) und/ oder mindestens ein Frequenzspektrum eines Strom- und/oder Spannungssignals (beispielsweise mittels Frequenzanalyse, z.B. Fast Fourier Transformation (FFT) durch charakteristische Frequenzgänge im Hochfrequenzbereich) zur Diagnose der verarbeiteten Kohle herangezogen werden.

In einer anderen Ausgestaltungsvariante können weitere Betriebsdaten bzw. Prozessdaten in der Einrichtung zum Rückschließen auf die Güte und/oder Art der verarbeiteten Kohle verwendet werden.

Diese Betriebsdaten betreffen vorteilhaft den Lastzustand und/oder die Drehzahl und/oder eine Betriebstemperatur und/oder einen Betriebsdruck der Maschine, um z.B. Laständerungen und Außentemperaturschwankungen vom eigentlichen mechanischen Verschleiß unterscheiden zu können.

Ergänzend zur erfindungsgemäßen Diagnose zur Güte und/oder Art des mit der Maschine verarbeiteten Materials oder auch unabhängig von dieser können aus der ermittelten Strom- und/oder Spannungsaufnahme auch Aussagen über den Verschleiß der Maschine getroffen werden.

Die erfindungsgemäße Lösung ist besonders gut für eine Kohlemahlmaschine bzw. Kohleaufbereitung eines Kraftwerks geeignet, bei der eine Kohlemühle direkt über eine Welle von einem Käfigläufermotor angetrieben wird. Messungen haben ergeben, dass auch mechanischer Verschleiß und auftretende Defekte im Strom- und/oder Spannungssignal des Motors nachgewiesen werden können. Beispielsweise kann ein Verschleiß von Mahlkugeln der Kohlemühle dadurch ermittelt werden, dass im Frequenzspektrum des Strom- und/oder Spannungssignals starke Veränderungen bei bestimmten charakteristischen Frequenzen beobachtet werden.

Ferner können aus verschiedenen Trends im Frequenzspektrum sowie in der Änderung der Mittelwerte und Zeitsignale Rückschlüsse auf den Verschleiß der Kohlemühle abgeleitet werden.

Als weiterer Zusatznutzen der erfindungsgemäßen Lösung können der aktuelle Zustand des jeweiligen Antriebsaggregats abgeleitet sowie Schäden detektiert werden.

Nachfolgend wird ein Ausführungsbeispiel der Erfindung anhand der beigefügten schematischen Zeichnung näher erläutert. Es zeigt:

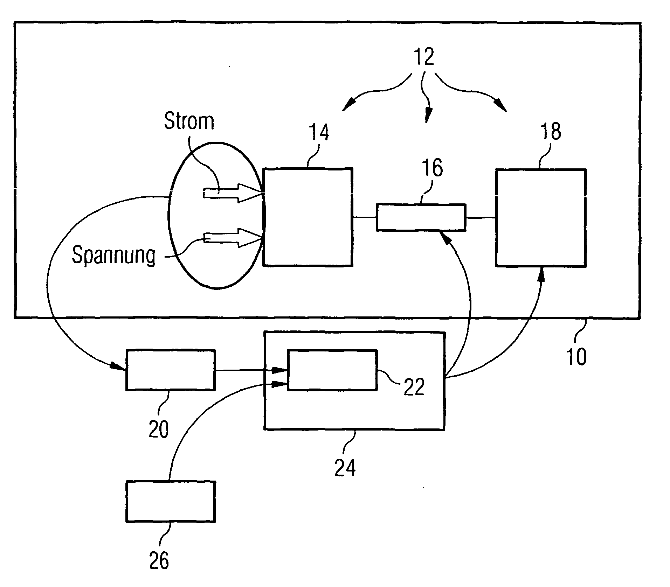

Die Figur, eine schematische Ansicht einer Kohlemahlmaschine und der zugehörigen erfindungsgemäßen Diagnoseeinrichtung.

In der Figur ist in der oberen Hälfte die erfindungsgemäß betrachtete technische Apparatur und in der unteren Hälfte weitere zugehörige erfindungsgemäße Einrichtungen veranschaulicht.

Eine Maschine bzw. ein Anlagensystem in Gestalt einer Kohlemahlmaschine 10 weist insbesondere drei Subsysteme 12 auf, nämlich einen Antrieb in Gestalt eines Käfigläufermotors 14, eine Kraft- und/oder Drehmomentenübertragung in Form einer Welle 16, mit der gegebenenfalls weitere nicht dargestellte Komponenten wie Getriebe, Kupplung und/oder Bremse verbunden sein können, sowie ein Aggregat in Form einer Kohlemühle 18.

Der Käfigläufermotor 14 ist mittels der Welle 16 ohne Zwischenschaltung elastischer Elemente drehsteif mit dem Aggregat 18 gekoppelt.

Zum Betrieb der Kohlemühle 18 nimmt der Käfigläufermotor 14 elektrischen Strom auf, wobei von dieser Stromaufnahme ein Strom- und/oder Spannungssignal abgeleitet wird.

Dieses Strom- und/oder Spannungssignal wird einer Einrichtung 20 zum Ermitteln der Strom- und/oder Spannungsaufnahme des Antriebs zugeführt. Mittels einer Analyse des Frequenzspektrums des Strom- und/oder Spannungssignals können Veränderungen bei bestimmten charakteristischen Frequenzen beobachtet werden. Aus den festgestellten Veränderungen wird dann mit Hilfe einer Einrichtung 22 auf einen gegebenenfalls vorliegenden Verschleiß an der Kohlemühle 18 rückgeschlossen. Die Einrichtung 22 zum Rückschließen auf gegebenenfalls vorliegenden Verschleiß wertet dabei insbesondere Trends im Frequenzspektrum sowie im Verlauf von Mittelwert und Zeitsignalen des Strom- und/oder Spannungssignals des Käfigläufermotors 14 aus. Ergänzend zu dieser Diagnose ist ferner eine Einrichtung 24 zum Rückschließen auf Güte und/oder Art des von der Kohlemühle 18 verarbeiteten Materials vorgesehen.

Ferner ist eine Einrichtung 26 vorgesehen, mittels der weitere Betriebsdaten erfasst werden und daraus der aktuelle Zustand des Käfigläufermotors 18 abgeleitet wird. Dabei wurden die Betriebsdaten zur Validierung der mit der Einrichtung 20 ermittelten Daten verwendet.

Das mit Hilfe der Einrichtungen 22, 24 und 26 durchgeführte Diagnoseverfahren bietet gegenüber konventionellen Verfahren folgende Vorteile:

An den dem Antriebsaggregat bzw. Käfigläufermotor 14 nachgeschalteten Subsystemen 16 und 18 müssen keine zusätzlichen Sensoren angebracht werden. Stattdessen muss beispielsweise lediglich eine Signalverarbeitungseinheit direkt an einer elektrischen Klemmverbindung oder einer zugehörigen Schaltanlage des Käfigläufermotors 14 angebracht sein.

Durch den erfindungsgemäßen Wegfall ausfallkritischer Sensorik und Verkabelung ist ferner eine höhere Zuverlässigkeit der Diagnose gewährleistet. In rauer industrieller Umgebung ist ein Einsatz von zusätzlicher Sensorik oft nur schwer möglich. So können z.B. Sensoren und/oder Kabelverbindungen für eine Schwingungsmessung oft nicht an den messtechnisch relevanten Stellen einer Kohlemühle platziert werden.

Im Gegensatz zu den bekannten Techniken ergeben sich mit der erfindungsgemäßen Lösung daher erhebliche Kosten- und Wettbewerbsvorteile.

## Patentansprüche

1. Kohlemahlmaschine (10) mit Subsystemen (14, 16, 18),
**dadurch gekennzeichnet,**
**dass** ferner eine Einrichtung (20) zum Ermitteln einer Strom- und/oder Spannungsaufnahme mindestens eines ersten Subsystems (14) während des Betriebs und eine Einrichtung (24) zum Rückschließen auf die Güte und/oder Art der mit einem zweiten Subsystem (18) verarbeiteten Kohle auf der Grundlage der ermittelten Strom- und/oder Spannungsaufnahme vorgesehen ist.

2. Kohlemahlmaschine (10) nach Anspruch 1,
**dadurch gekennzeichnet, dass** das erste Subsystem einen Antrieb (14) und/oder das zweite Subsystem eine Kohlemühle (18) umfasst.

3. Kohlemahlmaschine (10) nach Anspruch 2,
**dadurch gekennzeichnet, dass** der Antrieb (14) der Maschine und die angetriebene Kohlemühle (18) über eine Kraft- und/oder Drehmomentübertragung (16) insbesondere steif miteinander gekoppelt sind.

4. Kohlemahlmaschine (10) nach einem der vorhergehenden Ansprüche,
**dadurch gekennzeichnet, dass** die Einrichtung (24) zum Rückschließen auf die Güte und/oder Art der verarbeiteten Kohle zur Abtastung eines Strom- und/oder Spannungssignals mit mindestens einer Frequenz ausgebildet ist.

5. Kohlemahlmaschine (10) nach einem der vorhergehenden Ansprüche,
**dadurch gekennzeichnet, dass** die Einrichtung (24) derart ausgebildet ist, dass Augenblickswerte und/oder Mittelwerte und/oder mindestens ein Frequenzspektrum des Strom- und/oder Spannungssignals der Maschine (10) bzw. des Antriebs (14) zum Rückschließen auf die Güte und/oder Art der verarbeiteten Kohle herangezogen werden.

6. Kohlemahlmaschine (10) nach einem der vorhergehenden Ansprüche,
**dadurch gekennzeichnet, dass** die Einrichtung (24) derart ausgebildet ist, dass weitere Betriebsdaten (26) der Maschine (10) zum Rückschließen auf die Güte und/oder Art der verarbeiteten Kohle herangezogen werden.

7. Kohlemahlmaschine (10) nach Anspruch 6,
**dadurch gekennzeichnet, dass** die weiteren Betriebsdaten (26) den Lastzustand und/oder die Drehzahl und/oder eine Betriebstemperatur und/oder einen Betriebsdruck umfassen.

## Claims

1. Coal grinding machine (10) with subsystems (14, 16, 18) **characterised in that** a device (2) for determining a current and/or voltage draw of at least one first subsystem (14) during operation and a device (24) for inferring the quality and/or nature of the coal processed with the second system (18) on the basis of the determined current and/or voltage draw is also provided.

2. Coal grinding machine (10) according to claim 1, **characterised in that** the first subsystem includes a drive (14) and/or the second subsystem a coal grinding mill (18).

3. Coal grinding machine (10) according to claim 2, **characterised in that** the machine's drive (14) and the driven coal grinding mill (18) are in particular rigidly interconnected via a force and/or torque transmitter (16).

4. Coal grinding machine (10) according to one of the preceding claims, **characterised in that** the device (24) is designed to infer the quality and/or nature of the processed coal in order to sample a current and/or voltage signal with at least one frequency.

5. Coal grinding machine (10) according to one of the preceding claims, **characterised in that** the device (24) is designed such that instantaneous values and/or average values and/or at least one frequency spectrum of a current and/or voltage signal of the machine (10) and/or drive (14) are used to infer the quality and/or nature of the processed coal.

6. Coal grinding machine (10) according to one of the preceding claims, **characterised in that** the device (24) is designed such that further operating data (26) of the machine (10) is used to infer the quality and/or nature of the processed coal.

7. Coal grinding machine (10) according to claim 6, **characterised in that** the further operating data (26) includes the load state and/or the speed and/or an operating temperature and/or an operating pressure.

## Revendications

1. Machine à broyer du charbon (10) comprenant des sous-systèmes (14, 16, 18),
**caractérisée en ce que** sont prévus, en outre, un dispositif (20) servant à déterminer une consommation de courant et/ou de tension d'au moins un premier sous-système (14) lors du fonctionnement et un dispositif (24) servant à déduire la qualité et/ou le type du charbon traité par un deuxième sous-système (18), sur la base de la consommation de courant et/ou de la tension déterminées.

2. Machine à broyer du charbon (10) selon la revendication 1,
**caractérisée en ce que** le premier sous-système comprend un entraînement (14) et/ou **en ce que** le deuxième sous-système comprend un broyeur à charbon (18).

3. Machine à broyer du charbon (10) selon la revendication 2,
**caractérisée en ce que** l'entraînement (14) de la machine et le broyeur à charbon (18) entraîné sont notamment accouplés rigidement l'un à l'autre par une transmission de force et/ou du couple de rotation (16).

4. Machine à broyer du charbon (10) selon l'une des revendications précédentes,
**caractérisée en ce que** le dispositif (24) servant à déduire la qualité et/ou le type du charbon traité est conçu pour détecter un signal de courant et/ou de tension à au moins une fréquence.

5. Machine à broyer du charbon (10) selon l'une des revendications précédentes,
**caractérisée en ce que** le dispositif (24) est réalisé de telle façon que des valeurs instantanées et/ou des valeurs moyennes et/ou au moins un spectre de fréquences du signal de courant et/ou du signal de tension de la machine (10) ou de l'entraînement (14) soient utilisés pour déduire la qualité et/ou le type du charbon traité.

6. Machine à broyer du charbon (10) selon l'une des revendications précédentes,
**caractérisée en ce que** le dispositif (24) est réalisé de telle façon que d'autres données de fonctionnement (26) de la machine (10) soient utilisées pour déduire la qualité et/ou le type du charbon traité.

7. Machine à broyer du charbon (10) selon la revendication 6,
**caractérisée en ce que** les autres données de fonctionnement (26) comprennent l'état de charge et/ou la vitesse de rotation et/ou une température de fonctionnement et/ou une pression de fonctionnement.
